# EUROPEAN PATENT APPLICATION

(11) **EP 4 729 439 A1**
(43) Date of publication of application: **22.04.2026**
(21) Application number: 24207046.4
(22) Date of filing: 16.10.2024
(51) Int. Cl.: B65F 1/02, B65D 88/12

(54) **SHEET LINING MATERIAL FOR CONSTRUCTION WASTE COLLECTING CONTAINERS, CONSTRUCTION WASTE COLLECTING CONTAINERS LINED WITH SAID MATERIAL AND METHOD FOR MANAGING A SET OF CONTAINERS FILLED WITH CONCRETE WASTE**

(71) Applicant: Holcim Technology Ltd, 6300 Zug (CH)
(72) Inventor: ERNST, Frank, 5113 HOLDERBANK (CH); SCHULTE, Jannick, 5113 HOLDERBANK (CH)
(74) Representative: Regimbeau

(57) **Abstract**

The invention relates to a sheet lining of plastic material (1) for construction waste collecting container wherein it presents an average surface roughness (Ra) between 0.5 and 10 micrometers, preferably between 1 micrometer and 5 micrometers, and more preferably between 2 micrometers and 4 micrometers.

## Description

### FIELD OF THE INVENTION

The invention relates to construction waste collecting and recycling.

More particularly, it proposes a sheet lining material for construction waste collecting containers.

It also proposes collecting containers, in particular - but not limited to - collecting skips, for collecting construction waste.

The invention is particularly well suited to the collection of fresh concrete produced in excess on a construction site and to be recycled.

The invention also relates to a method for managing a set of containers filled with concrete waste.

### BACKGROUND

It is common practice, on construction sites, to use collecting containers (such as metal skips) of various shapes and sizes to dispose of construction waste. Construction waste can include materials such as fresh concrete which cannot be used immediately on the site. Problems arise when disposing these fresh concrete surpluses, as the concrete binds well to the skip walls after setting. This has several drawbacks, especially when the concrete waste is later removed from the skip. Skips are indeed usually emptied by flipping them over so that the waste materials simply fall out of the skip.

While concrete might still be able to be removed in such a way from a new undented and freshly painted skip, this is not the case for the majority of available skips. As skips age, the surface deteriorates, causing the concrete to adhere more and more to the walls, leading to difficult cleaning, often requiring manual labor, power tools and cleaning products.

Because of these issues, on construction sites, fresh concrete is sometimes not allowed to be poured directly into waste skips. Instead, the concrete is dumped onto the ground on site and then disposed of after setting has occurred. This method has multiple drawbacks, such as a lot of space is required for concrete to spread out on the ground, power tools are needed on site to break the concrete up, or the concrete is often contaminated with the topsoil, increasing the effort required for a high-quality recycled concrete.

Alternatively, a temporary lining material, often plastic foils such as polypropylene, is placed in the skip to prevent concrete to steel contact. While various materials are suitable, the current standard is 3-5mil PP foil. This material is often readily available on construction sites as it is normally used as a moisture barrier, erosion control or as a general protection layer for construction equipment and material. This system has many drawbacks: the liner has to be roughly cut to size and placed within in the skip, adding a process step; the liner has to be placed the moment the first fill of the skip occurs, otherwise it might fly away; special attention has to be paid during the filling process to avoid the liner from folding in on itself and rendering it useless; the liner becomes embedded in the dried concrete, reclassifying the waste from pure concrete to mixed construction waste; removal of the liner is a tedious manual job and parts of the lining material often remain within folds of the concrete (this reduces the overall quality of the recycled aggregate or adds the need for a separate screening step during the processing); in light of environmental and sustainability goals of developers and construction companies, the use of a disposal polymer within a process designed to promote sustainability topics by recycling waste concrete, is seen as overall unfavorable.

Both options lead to extra process steps and / or create unnecessary waste materials. In addition, temporary lining materials can generate debris when the hardened concrete is removed from the skip, which contaminates the concrete. If the waste concrete is later recycled as a construction material, these plastic debris would need to be removed at a later stage, increasing the workload and process steps to produce good quality recycled concrete.

### SUMMARY

One general aim of the invention is to allow complete elimination of excess concrete waste in view of fully recycling it into high quality aggregates suitable for structural concrete use.

To this end, according to one aspect, the invention proposes a sheet ling material which overcomes the aforementioned disadvantages and can be used as a permanent lining material that is mechanically fixed to the container and is reusable.

It allows the use of the container for fresh concrete waste and drastically reduces the effort required for removing the concrete from the container after drying. Further, this allows for quicker and more efficient use while creating less waste material. Additionally, the permanent lining protects the steel skip from the abrasive nature of concrete waste allowing for an overall longer skip lifetime.

More specifically, the invention proposes a permanent sheet lining material for construction waste collecting container wherein it presents an average surface roughness Ra between 0.5 and 10 micrometers, preferably between 1 micrometer and 5 micrometers, and more preferably between 2 micrometers and 4 micrometers. The surface roughness Ra can be measured using any stylus-based surface roughness tester that complies with the standard EN ISO 3274:1999. The surface roughness Ra is an arithmetic mean roughness, i.e. an average of the absolute deviations from the mean line of the surface.

Advantageously but optionally, the sheet lining material according to the invention can comprise at least one of the following features, taken alone or in combination:
- a toughness between 4,5 and 90 kJ, preferably between 50 kJ and 80 kJ, and more preferably between 60 kJ and 75 kJ;
- an indentation hardness between 15 MPa and 150 MPa, preferably between 50 MPa and 120MPa, and more preferably between 60 MPa and 100 MPa;
- an elasticity between 200 MPa and 1000 MPa, preferably between 400 MPa and 800 MPa, and more preferably between 500 MPa and 700 MPa;
- a thickness between 5 and 25 millimeters, preferably between 8 and 12 millimeters, and more preferably between 9 and 11 millimeters;
- sheet lining material is made of ultra-high-molecular-weight polyethylene, high-density polyethylene, low-density polyethylene, high-density polypropylene, low-density polypropylene, polytetrafluoroethylene, polycaprolactam and derivatives thereof, or a combination thereof.

This plastic material has the advantage of having a high resistance to impacts and abrasion and fresh concrete does not strongly bind to it when setting.

The invention also relates to concrete waste collecting container comprising an inner surface, wherein said inner surface is lined with the permanent sheet lining material. Advantageously but optionally, the collecting container can comprise at least one of the following features, taken alone or in combination:
- the sheet lining material is riveted or screwed to the inner surface;
- the collecting container is lined with several sheets side by side and welded together;
- the sheets are edge welded.

More generally, according to yet another aspect and independently from the first aspect or in combination thereof, the invention proposes a construction waste collecting container equipped with sensors adapted to remotely exchange with a monitoring central server. The collecting container can be lined with the permanent sheet lining material here above presented or can be lined with another lining material or can even be not lined. Such a collecting container may present the following features, alone or in combination:
- the collecting container comprises at least one GNSS module configured to ascertain and relay the geographical position of the collecting container, at least an accelerometer, at least one RFID tag configured to identify the collecting container to the central server;
- the collecting container comprises a humidity sensor, a resonance sensor configured to detect whether concrete in the collecting container is fresh or set, a radar level sensor configured to detect a collecting container fill level, a temperature sensor and a pH sensor, each sensor being configured to communicate with the central server.

Also described are several methods of managing a set of such collecting containers equipped with sensors.

A first method, implemented by the central server comprise the following steps:
- real-time monitoring of the position and the filled or unfilled status of the set of collecting containers using the GNSS module, the accelerometer and the RFID tag of each collecting container.
- receiving a request for a quantity of concrete, the request including a delivery position for the concrete;
- selecting a collecting container from the set of collecting containers on the basis of its status and position;
- issuing an instruction to deliver the selected collecting container to the delivery position.

The first method is advantageously but optionally completed by the following features: the step of monitoring comprises monitoring the concrete temperature, humidity, pH, concrete hardening and a level at which each collecting container is filled using the sensors of each collecting container and the selection step is carried out on the basis of these data.

A second method, implemented by the central server, comprise the following steps:
- real-time monitoring of the position and the filled or unfilled status of the set of collecting containers using the GNSS module, the accelerometer and the RFID tag of each collecting container;
- determination of an excess concrete production of a construction site;
- selecting an empty collecting container empty collecting container corresponding to the estimated quantity of the excess concrete produced by the construction site from the set of collecting containers on the basis of its status and position;
- issuing an instruction to deliver the selected empty collecting container to the delivery position.

Used in conjunction, the first and second methods applied to a set of collecting containers allow streamlined logistics akin to a milk run system, where collecting container delivered thanks to the second method and filled on the construction site can be redistributed following instruction emitted by according to the first method. Accordingly, collecting containers emptied after delivery following the first method can be redistributed according to the second method. Additionally, purpose made collecting containers lined with the lining material according to the invention with non-stick properties increases the fluidity of such operations.

### DESCRIPTION OF THE DRAWNINGS

Other features, objectives and advantages of the invention will be revealed by the description that follows, which is purely illustrative and not limiting, and which must be read with reference to the appended drawings in which:
**Figure 1** illustrates a schematic view of several sheets of the lining material welded and a skip according to another embodiment;
**Figure 2** illustrates a schematic view of several disjointed sheets of the lining material according to an embodiment;
**Figure 3** illustrates a schematic view of a skip according to another embodiment;
**Figure 4** illustrates a schematic view of a skip according to the same embodiment that **Figure 3****;**
**Figure 5** illustrates a schematic view of a set of collecting containers and different geographical locations according to an embodiment;
**Figure 6** is a flowchart showing the steps of a method according to an embodiment;
**Figure 7** is a flowchart showing the steps of another method according to an embodiment.

In all the figures, similar elements bear identical labels.

### DETAILED DESCRIPTION OF THE INVENTION

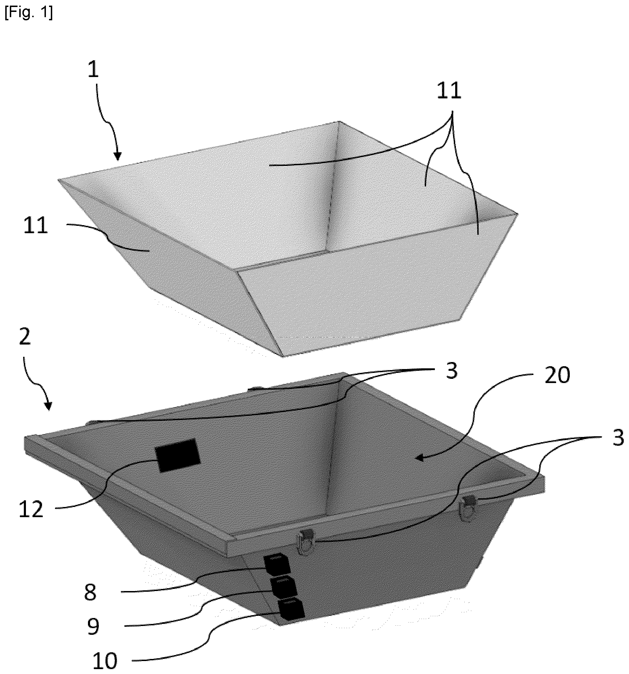

Figure 1 represents a collection container **2** for concrete collection and a permanent lining material **1.** Lining material **1** is formed of various plastic lining sheets **11,** for example rectangular, juxtaposed and/or stacked together to match the various inner surface sections of the collection container **2.**

Surface of the lining material **1** has a rugosity that is low enough to make sure that concrete does not adhere to the surface. More specifically, it presents an Average Surface Roughness (Ra) is between 0,5µm and 10µm, preferably between 1µm and 5µm, and more preferably between 2µm and 4µm.

The lining material can further present the following characteristics:
- toughness between 4,5kJ and 90kJ (Izod impact strength ISO 180/1A at 23°C), preferably between 50kJ and 80kJ, and more preferably between 60kJ and 75kJ;
- indentation between 15 MPa and 150 MPa (ISO 2039-1), preferably between 50MPa and 120MPa, and more preferably between 60 MPa and 100M Pa;
- Elasticity between 200MPa and 1000MPa, preferably between 400MPa and 800MPa, and more preferably between 500MPa and 700MPa;
- A thickness between 5 and 25 millimeters preferably between 8 and 12 millimeters, and more preferably between 9 and 11 millimeters.

Hard plastic materials are particularly suited for the lining material 1, for example: ultra-high-molecular-weight polyethylene (UHMWPE), high-density polyethylene, low-density polyethylene, high-density polypropylene, low-density polypropylene, polytetrafluoroethylene, polycaprolactam and derivatives thereof or a combination thereof.

UHMWPE has a molecular weight preferably between 3.5 and 7.5 million Da. high-density polyethylene has a density preferably between 930 and 970 kg/m³ and low-density polyethylene between 917 and 930 kg/m³. High-density polypropylene has a density preferably between 895 and 900 kg/m³ while low-density polypropylene has a density preferably between 900 and 930 kg/m³.

UHMWPE is more particularly suited. In addition to being resistant to abrasion and mostly inert, due to extremely long polymer chains, high crystallinity and low surface energy, UHMWPE is considered to be "self-lubricating", leading to minimal friction between UHMWPE and the concrete. Its high elasticity allows the sheet 11 to conform to the mating surface of the concrete, reducing damage and surface imperfections, thus allowing for a long lining material 1 lifetime.

The lining material 1 is permanent and only needs to be replaced every six to twelve months, which is around five hundred uses. When the lining material 1 is replaced, it is separated from other waste materials in comparison to the temporary liner currently used. This allows for the controlled single material recycling of the liner sheets. While UHMWPE recycling is challenging on its own, downcycling into less polymerized versions like HDPE and PE is trivial. Both HDPE and PE have well established recycling chains in all major developed nations and make up the majority of recycled non bottle plastics.

Construction waste collecting container **2** can be any suitable storage device, such as a skip or a reinforced fabric bag.

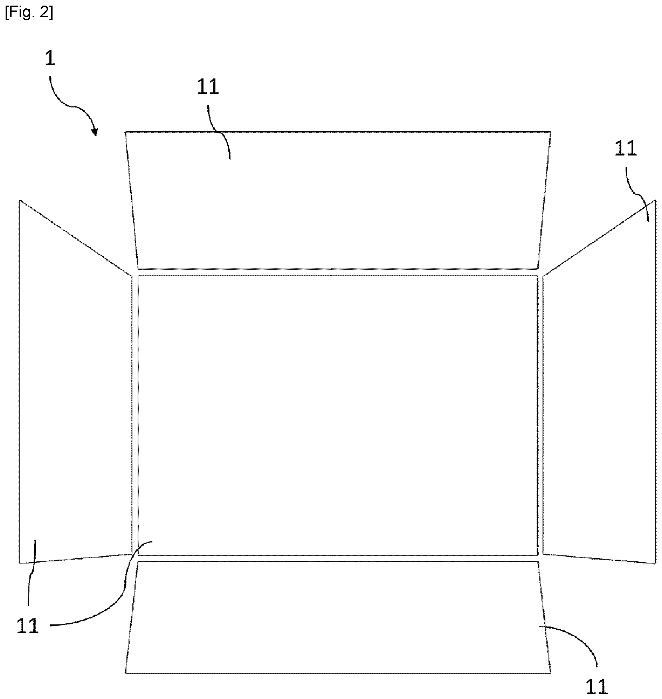

Referring to Figure 2, the collection container **2** represented is a metal skip **2** comprising four walls and a base and having its inner surface **20** lined with the lining material **1.**

The geometry of lining material **1** is adapted to correspond to that of inner surface **20.** In the example as represented on the figures, lining material **1** consists of five rectangular sheets **11** milled out of a suitable plastic material (for example UHMWPE) sheet thick of between 5-10mm.

Sheets **11** respectively cover the four walls and the base. They are welded together side by side, e.g. using a hot air welder.

After placing the individual sheets **11** within the skip **2,** the sheets **11** are riveted, screwed or attached using another mechanical method into place and then edge welded using a hot air welding gun and a welding rod from the same plastic material. After welding, the sheets **11** form watertight lining, preventing seepage.

Mechanically connecting the sheets **11** to the skip **2,** compared to adhered or glued sheets **11,** increases stability when container **2** is subjected to temperature variations, as temperature variations induce thermal expansion, in particular in the case of a metal skip **2.**

Advantageously, at least one of the walls of the skip **2** is inclined of at least 20° to a tangent line of the base, to further reduce friction and improve the removal process of the dried concrete when the skip **2** is tilted. In combination with the liner, the inclined wall makes it much easier to empty the concrete than with current solutions. This further increases the lifetime of the skip **2,** as dents start to accumulate over the lifetime of the skip **2,** these are less likely to have a binding effect on the dried concrete block.

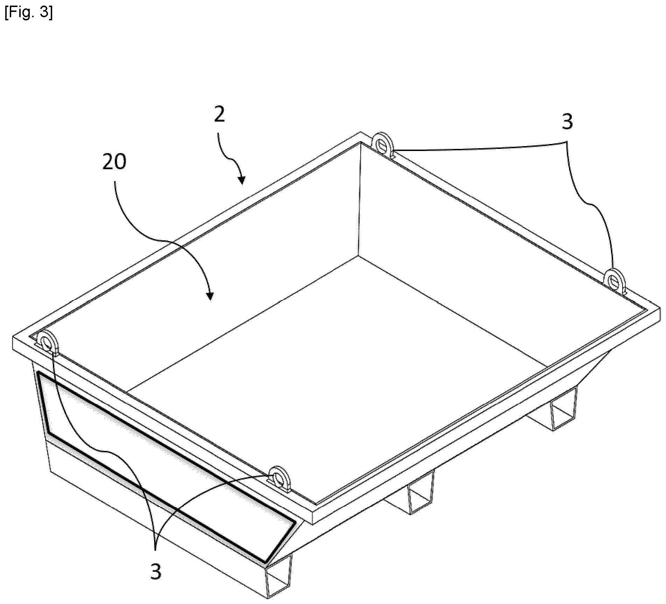

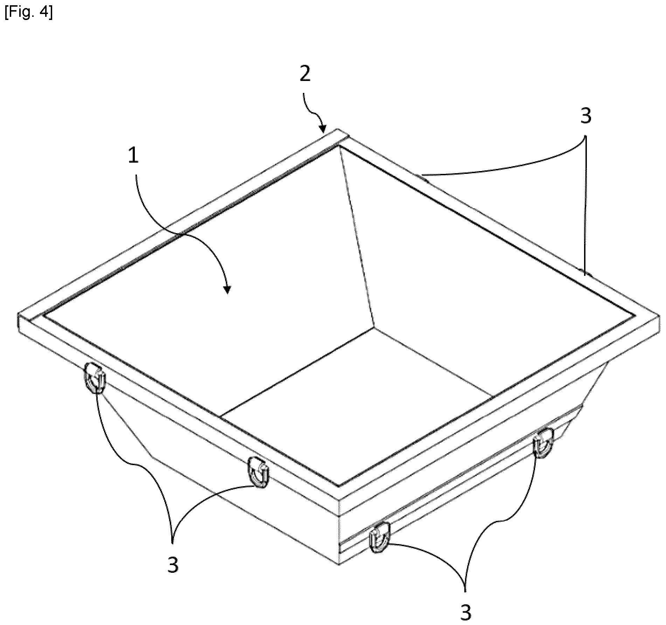

For the same purpose, as illustrated in figure 3 and 4, two opposite walls of the skip **2** comprise each two lifting lugs **3** at a distal edge of the base **21** and a distinct third wall comprises two lifting lugs **3** at a proximal edge of the base. The skip **2** possesses thus six lifting lugs **3** allowing for safe on-site transportation utilizing a common site crane. This is important for fresh concrete waste occurring beyond ground floor or during subterraneous activities. The two lifting lugs **3** mounted lower on the third wall of the skip **2** allow a truck operator to flip the skip **2** for concrete removal using two chains attached to a clamshell bucket. Commercially available skips often only feature four primary lifting lugs around the upper perimeter of the skip. Using only two of those to try to flip the skip leads to the skip not being able to be fully flipped due to the weight distribution of the skip stopping the momentum once the lifting lugs on the skip and the chain mounting point on the clamshell bucket are inline. While operating on a construction site, the skip 2 does not need to leave the site to be emptied, thanks to the lifting lug **3,** reducing overall cargo weight and thus emissions.

Advantageously, a wall opposite to the third wall comprises a reinforced edge distal to the base of the skip **2.** In other words, the top edge opposite to the two lower lifting lugs **3** is reinforced to provide extra strength for flipping the skip **2** during material removal. This prevents premature failure of the skip **2** and increases overall lifetime.

This lining material **1** allows the use of skip **2** for fresh concrete waste and drastically reduces the effort required for removing the concrete from the skip **2** after drying. Further, this allows for quicker and more efficient use while creating less waste material. Additionally, the permanent lining protects the steel skip **2** from the abrasive nature of concrete waste allowing for an overall longer skip **2** lifetime. Fresh concrete can be directly poured into skip **2,** no preparation process step is necessary. Moreover, dried material can be removed from the skip as one single block through flipping without requiring manual labor. Due to the skip **2** geometry being optimized for the specific use case of collecting fresh waste concrete, it is deemed safe to empty on site by the truck operator, given a sufficient exclusion zone is observed. This enables a higher asset utilization in comparison to current methods where skips have to be transported off site to be emptied. The skip **2** is also protected by the lining material **1** from the abrasive nature of fresh concrete pouring leading to a longer lifetime and less service interruptions due to unplanned maintenance or repairs.

Should it be lined with the lining material **1,** or lined with any other material or not lined, a collecting container such as skip **2** can also be equipped with several sensors and metric devices which data can be used individually but also as part of several methods of managing a set **200** of collecting containers.

Collecting container **2** can in particular be equipped with a Global Navigation Satellite System (GNSS) module **8** configured to ascertain and relay the geographical position of the collecting container to a central server **4,** and/or an accelerometer **9** configured to detect and communicate to the central server **4** when the collecting container is moved, turned over, or filled and/or a radio frequency identification tag (RFID) **10** configured to identify the collecting container to the central server **4** when scanned at proximity by a handled device. RFID tag can use the Near-Field communication (NFC) protocol. The identity stored on the central server **4** can thus be controlled.

Furthermore, collecting container **2** can also be equipped with a capacitive or resistive humidity sensor, a load cell, a resonance sensor configured to detect whether concrete in the collecting container is fresh or set, a radar level sensor configured to detect a collecting container fill level, temperature sensors and a pH sensor, each of these sensors **12** being configured to communicate with a central server **4.** Temperature sensors can comprise thermocouples, resistance temperature detectors (RTDs), infrared temperature sensors and the like. Various other suitable sensors **12** can also be used, like sensors **12** that measure resonance (for example: piezoelectric or micro electromechanical system (MEMS) accelerometers, strain gauges, velocity transducers, acoustic sensors) or ultrasound sensors. The signals obtained from such sensors **12** can be processed so as to assess if the concrete in the collecting container has set or is still fresh.

Central server **4** is configured to be connected by a wireless communication network to the various collecting containers in order to collect the data in real-time. Of course, the data communicated to the central server **4** are associated with an identifier that corresponds to that of the RFID tag, in order to distinguish the collecting containers. Each collecting container can also be equipped with an information module with a screen and user interface, for example placed on the outside of wall **22** in the case of a skip **2,** displaying the data from the sensors. This allows operators to quickly acquire information, for example whether the concrete is fresh or set when the skip **2** is sheeted.

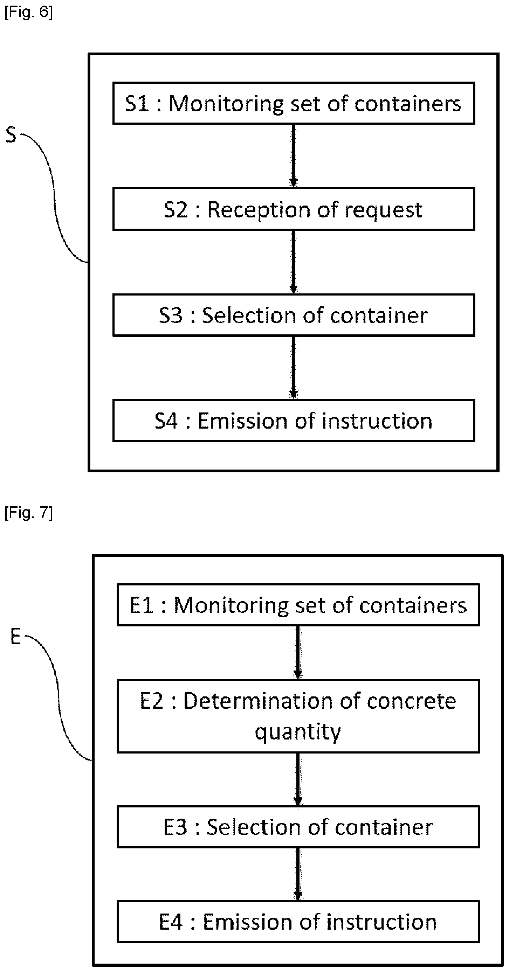

These sensors **12** and location or identification devices **8, 9, 10** enable the management method S illustrated figure 6 to be implemented by the central server **4.** Method S comprises a first step S1 of real-time monitoring the position and the filled or unfilled status of the set **200** of collecting containers using the GNSS module **8,** the accelerometer **9** and optionally the RFID tag **10** of each collecting container. The central server **(4)** therefore knows and preferably displays on an interface the identity, position and status (full or empty) of each collecting container in the set **200** for the current time.

Step S1 can be carried out independently and includes receiving data from the sensors **12** and devices, storing them in a database linked to the server **4** and possibly displaying them on an interface when a request is made. As a minimum, the data monitored are the position data obtained from the GNSS module **8.** Central server **4** can also calculate the amount of concrete in the set **200** of collecting containers. The combination of all the data collected is used to optimize the pickup of concrete materials from the collecting containers on different construction sites.

A second step S2 comprises a reception by the central server **4** of a request for a quantity of concrete, the request including a delivery position for the concrete. The request is issued, for example, by a construction site **5,** a recycling site **6** or by any other installation that may need concrete, and may be issued, for example, by an automated or non-automated means of communication adapted to communicate with the central server **4.**

A selection step S3 is then carried out, and a collecting container from the set **200** of collecting containers is selected on the basis of at least its position and of its filling stage. This step S3 can be carried out by an algorithm which takes as input the data from all or part of the sensors **12** and location or identification devices **8, 9, 10** in order to provide as output one or more collecting containers, making it possible to respond to the request received. The algorithm also seeks to minimize the travel time of the collecting container and optimize the overall stock of concrete in the set **200** of collecting containers by considering its quality (e.g. its storage time, the environmental conditions experienced during this time and its level of setting). The data from at least one among a humidity sensor, a resonance sensor, a radar level, a temperature sensor and/or a pH sensor are particularly useful for this purpose, in order to know the state of the concrete and avoid waste. Once one or more collecting container loaded with the right quantity of a concrete with desirable quality, the central server **4** issues an instruction to deliver the selected collecting container(s) to the delivery position, for example a construction site **5** in a fourth step S4. At any step of the method, the identity of a collecting container can be verified by scanning its RFID tag **10** using the handheld device. The handled device is configured to communicate with the central server **4** and communicate modify data. For example, a collecting container can be scanned when it is being loaded and/or unloaded from a transport vehicle such as a truck in order to avoid incorrect movements. Preferably, the scanning device can be integrated into the transport vehicle.

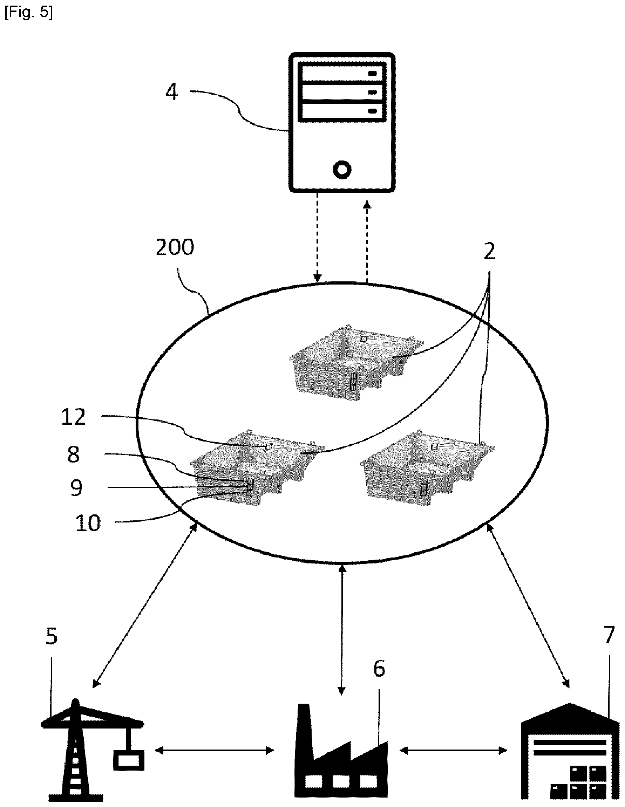

Method S can be used as part of a wider concrete management streamlined cycle on different sites, including constructions site **5,** recycling site **6** and/or storage sites **7,** as illustrated figure 5.

Advantageously, in reference to figure 7, the central server **4** also performs a method E comprising a step E1 of real time monitoring of a set 200 of collecting container (similar to the step S1), a step E2 of determination of an excess concrete production of a construction site **5,** a step E3 of selection of a number of empty collecting container corresponding to the estimated quantity of the excess concrete produced by the construction site **5** and a step E4 in which an order to transport the selected collecting containers to the construction site **5 is** emitted. Step E2 can use advantageously past statistical data of the production of construction site **5,** an average of known production data from similar sites or other relevant data. Of course, step E3 uses data from the sensors **12** and location or identification devices **8, 9, 10,** in particular in order to select only empty collecting containers and to optimize the transport distance, the position of the site being known. This step E3 can be implemented by an algorithm.

Methods S and E applied to a set **200** of collecting containers lined with the lining material **1** allow streamlined logistics akin to a milk run system, where collecting container delivered thanks to method E and filled on the construction site **5** can be redistributed following instruction emitted by according to method S. Accordingly, collecting container emptied after delivery following method S can be redistributed according to method E. Additionally, purpose made collecting containers lined with the lining material **1** with non-stick properties are essential to ensure smooth operation of such service, to increase skip longevity and to avoid contamination of the recycled aggregate with temporary lining materials like plastic foil. Additionally, a dedicated network of partners in the logistic and waste processing businesses is required to enable full recovery of left over concrete.

The lined collecting container enabled methods of collecting fresh waste concrete currently not available on the market. The combination of lining material 1 use for the industry, use case specific design features of skip **2** and environmental benefits allows the methods S and E to be implemented over a long period of time and with optimum efficiency.

## Claims

1. A sheet lining of plastic material (1) for construction waste collecting container wherein it presents an average surface roughness (Ra) between 0.5 and 10 micrometers, preferably between 1 micrometer and 5 micrometers, and more preferably between 2 micrometers and 4 micrometers.

2. The sheet lining material (1) according to claim 1, wherein it presents
- a toughness between 4,5 and 90 kJ, preferably between 50 kJ and 80 kJ, and more preferably between 60 kJ and 75 kJ;
- an indentation hardness between 15 MPa and 150 MPa, preferably between 50 MPa and 120MPa, and more preferably between 60 MPa and 100 MPa;
- an elasticity between 200 MPa and 1000 MPa, preferably between 400 MPa and 800 MPa, and more preferably between 500 MPa and 700 MPa;

3. The sheet lining material (1) according to one of claims 1 and 2, wherein the sheet lining material (1) is made of ultra-high-molecular-weight polyethylene, high-density polyethylene, low-density polyethylene, high-density polypropylene, low-density polypropylene, polytetrafluoroethylene, polycaprolactam and derivatives thereof, or a combination thereof.

4. The sheet lining material (1) according to one of claims 1 to 3, wherein it presents a thickness between 5 and 25 millimeters, preferably between 8 and 12 millimeters, and more preferably between 9 and 11 millimeters.

5. A concrete waste collecting container comprising an inner surface (20), wherein said inner surface (20) is lined with a permanent sheet lining material (1) according to one of claims 1 to 4.

6. The concrete waste collecting container according to claim 5, wherein the sheet lining material (1) is riveted or screwed to the inner surface (20).

7. A concrete waste collecting container according to one of claims 5 to 6, wherein the sheets (11) are edge welded by fusion.

8. A collecting container according to one of claims 5 to 7, wherein said container is equipped with sensors **(8, 9, 10, 12)** adapted to remotely exchange with a monitoring central server **(4).**

9. A concrete waste collecting container according to claim 8, wherein it comprises at least one GNSS module **(8)** configured to ascertain and relay the geographical position of the collecting container, at least an accelerometer **(9),** at least one RFID tag (10) configured to identify the collecting container to the central server **(4).**

10. A concrete waste collecting container according to claim 8 and 9, further comprising a humidity sensor and/or a resonance sensor configured to detect whether a concrete in the collecting container is fresh or set, and/or a radar level sensor configured to detect a collecting container fill level, and/or a temperature sensor and/or a pH sensor, each sensor **(12)** being configured to communicate with the central server **(4).**

11. A method (S) of managing a set **(200)** of collecting containers as claimed in claim 9, implemented by a central server **(4),** the method comprising the following steps:
- real-time monitoring (S1) of the position and the filled or unfilled status of the set **(200)** of collecting containers using the GNSS module **(8)** and the accelerometer (9) of each collecting container;
- receiving (S2) a request for a quantity of concrete, the request including a delivery position for the concrete;
- selecting (S3) a collecting container from the set **(200)** of collecting containers on the basis of its status and position;
- issuing (S4) an instruction to deliver the selected collecting container to the delivery position.

12. The method (S) according to claim 11 to manage a set (200) of collecting containers according to claims 10 and 11 in combination, wherein the step of monitoring (S1) comprises monitoring the concrete temperature, humidity, pH, concrete hardening and a level at which each collecting container is filled using the sensors of each collecting container, the selection step (S3) being carried out on the basis of these data.

13. A method (E) of managing a set (200) of collecting containers as claimed in claim 9, implemented by a central server (4), the method comprising the following steps:
- real-time monitoring (E1) of the position and the filled or unfilled status of the set of collecting containers using the GNSS module (8) and the accelerometer (9) of each collecting container;
- determination (E2) of an excess concrete production of a construction site (5);
- selecting (E3) an empty collecting container empty collecting container corresponding to the estimated quantity of the excess concrete produced by the construction site (5) from the set of collecting containers on the basis of its status and position;
- issuing (E4) an instruction to deliver the selected empty collecting container to the delivery position.
